Europäisches Patentamt

European Patent Office

Office européen des brevets

(19)

(11) Publication number: **0 102 813**
**B1**

# (12) EUROPEAN PATENT SPECIFICATION

(45) Date of publication of patent specification: **01.06.88**

(51) Int. Cl.⁴: **B 29 C 33/24, F 16 J 15/40**

(21) Application number: **83304899.4**

(22) Date of filing: **24.08.83**

(54) **Straight-hydraulic mold clamping system.**

(30) Priority: **28.08.82 JP 149599/82**
**06.04.83 JP 60485/83**

(43) Date of publication of application:
**14.03.84 Bulletin 84/11**

(45) Publication of the grant of the patent:
**01.06.88 Bulletin 88/22**

(84) Designated Contracting States:
**CH DE FR GB IT LI**

(56) References cited:
**DE-A-1 946 786**
**DE-B-2 109 502**
**US-A-4 014 555**

**"Kunststoffverarbeitung" O.Schwarz, 2nd
Edition "Schliesseinheit 1981 pages 84-85**

(73) Proprietor: **TECHNOPLAS INC.**
**7-15, Higashi-Kohjiya 5-chome**
**Ohta-ku Tokyo (JP)**

(72) Inventor: **Kojima, Hisashi**
**56-3, Denenchofu 5-chome**
**Ohta-ku Tokyo (JP)**

(74) Representative: **Ben-Nathan, Laurence Albert.
et al**
**Urquhart-Dykes & Lord 91 Wimpole Street**
**London W1M 8AH (GB)**

Courier Press, Leamington Spa, England.

## Description

The present invention relates to a mold clamping system for use in an injection molding machine, a die casting machine or the like, and more particularly to the construction of a straight-hydraulic mold clamping system capable of securing the parallelism of a platen.

A conventional straight-hydraulic mold clamping system for use in an injection molding machine etc., as described in O. SCHWARZ "Kunststoffverarbeitung" 2nd Edition "Schliesseinheit" 1981, pages 84—85 comprises a bed, a cylinder for mold clamp disposed horizontally on the bed, and a stationary platen and a movable platen disposed in the advancing and retreating directions of the mold clamp cylinder respectively to effect mold-closing and mold-opening movement relative to the stationary platen. The mold clamp cylinder has a piston reciprocating within the inner chamber of the mold clamp cylinder connected to a rod projecting to the outside of the mold clamp cylinder and supported slidably by a bearing portion for the rod. The movable platen is fastened to the rod and guided by tie bars. The rod bearing portion is constructed by a bush having a clearance of at least 30 μ for allowing advance or retreat of the rod. Therefore, there is a fair possibility of the rod being made eccentric within the range of the clearance of the bearing portion and simultaneously of the tie bars being bent down by the weights of the movable platen and a molding die attached thereto, with the result that parallelism of the movable and stationary platens is to be deviated. If this parallelism is deviated, an offset load is exerted on guide pins etc. of the molding die to give rise to a wear phenomenon, registration of the molding dies cannot completely be effected and consequently, the service life of the molding dies comes to be shortened.

In order to eliminate the aforementioned drawbacks, there has heretofore been adopted either a method of making the diameter of the tie bars large so as to minimize the deflection of the tie bars or a method of interposing a slide plate between the movable platen and the bed.

In the former method, however, it has its own limit to make the diameter of the tie bars large because the larger the diameter of the tie bars, the smaller the area of the platen surface to which a molding die is to be attached. When the surface area of the platen is increased in view of the relationship between the diameter of the tie bars and the surface area of the platens, the load exerted on the system as a whole becomes large and such large load is not preferable. Therefore, the diameter of the tie bars can only be made larger within the range not restrained by the surface area of the platen to which the molding die is to be attached.

Further, in the latter method, the parallelism of the mold clamp cylinder, stationary platen and movable platen provided with the slide plate must be retained. However, since the bed of the system does not necessarily have horizontality and since the bearing portion has a clearance, it is difficult to precisely secure the aforementioned parallelism from a standpoint of mechanical technology. Assuming that the parallelism can precisely be retained, there are disadvantages that the slide plate is thermally affected during a molding cycle to have errors in dimension, that since there is formed between the slide plate and the bed a clearance necessary for the sliding of the slide plate and since the slide plate is worn off due to metallic contact with the bed, the clearance must be adjusted in accordance with the frequency in use while allowing its errors, and that the slide plate is required to be slightly adjusted in accordance with the weight of a molding die every one time of interchange of the molding die. In any event, the limit of the deviation from parallelism of the platens is 50 μ at most and cannot be guaranteed over a long period of time. In the present state, therefore, spotting of the molding dies is carried out in consideration of the aforementioned deviation from parallelism of the platens.

In proportion as engineering plastics is developed, there is now an increased demand for accuracy on the order of microns in injection molding. In order to fulfil this demand, molding dies are absolutely required to cause their parting surfaces to precisely register with each other. Even though the molding dies are precisely finished, if there are errors in mold registration, it will be impossible to effect molding with accuracy on the order of microns. In this sense, since the limit of the deviation from parallelism of the platens of the conventional mold clamping system is 50 μ at most, the molding dies of the system cannot be applied at all to precision parts which are required not to have accuracy deviation of more than 10 μ.

An object of the present invention is to provide a straight-hydraulic mold clamping system in a molding machine, which has a self-alignment construction in response to the amount of advance or retreat of a rod by allowing an oil to function within annular oil grooves formed in a rod bearing portion of a mold clamp cylinder and also has a cantilever construction by utilization of the rigidity of the rod, whereby the parallelism of a movable platen is precisely retained and maintained over a long period of time without causing any deviation from parallelism.

According to the present invention, there is provided a straight-hydraulic mold clamping system of an injection molding machine, comprising a rod supported slidably by a bearing portion of a mold clamp cylinder so as to slidably protrude from the mold clamp cylinder, a movable platen attached to the rod and guided by tie bars so as to effect mold-opening and mold-closing movements relative to a stationary platen, and a piston connected to the rod and slidably mounted within the mould clamp cylinder; characterized in that said bearing portion is provided in its inner peripheral surface with a plurality of balancing annular oil grooves which are spaced apart from each other in the axial direction thereof and are unconnected with one another within the body of the bearing portion, and said piston is provided in its outer peripheral surface with a plurality of balancing annular oil grooves which are spaced apart from each other in the axial direction thereof and are unconnected with one another within the body of the piston, clearances for oil films being provided between the confronting peripheral surfaces of the rod and the bearing portion, and of the piston and the mold clamp cylinder, respectively.

One way of carrying out the present invention is described in detail below with reference to drawings which illustrate the specific embodiments in which:—

Figure 1 is a partially sectioned schematic view of one embodiment of the mold clamping system according to the present invention, showing the mold-opening limit.

Figure 2 is a partially sectioned schematic view of the embodiment, showing the mold-closing limit.

Figure 3 is an enlarged cross section showing the principal portion of the embodiment.

Figure 4 is a partially sectioned schematic view of another embodiment of the mold clamping system according to the present invention, showing the mold-opening limit.

Figure 5 is an enlarged cross section showing the principal portion of the embodiment in Figure 4.

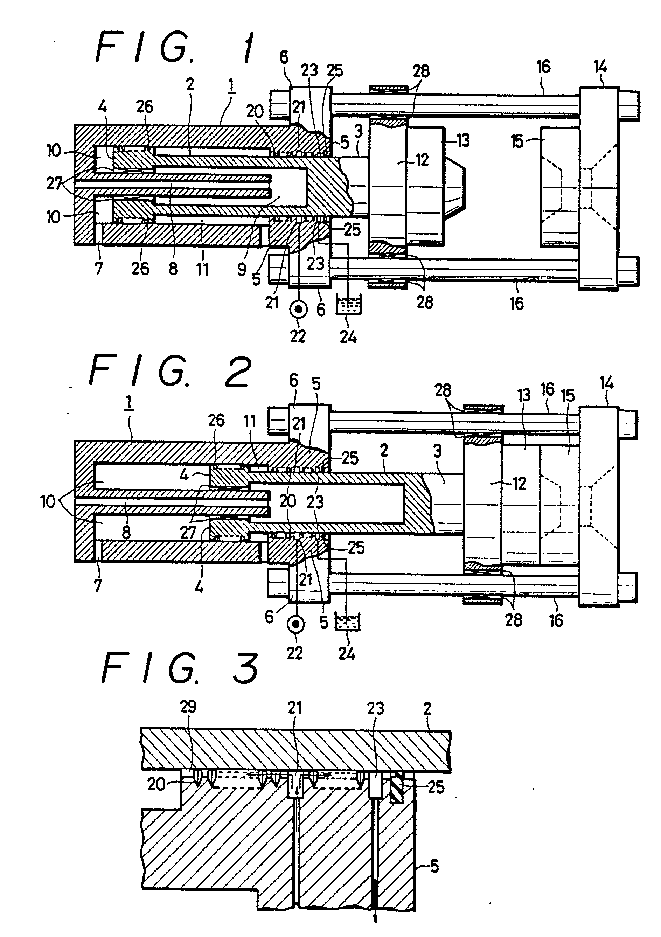

In Figures 1 to 3 showing one embodiment of the mold clamping system according to the present invention, reference numeral 1 denotes a mold clamp cylinder, 2 a mold clamp ram, 3 a rod of the mold clamp ram 2, 4 a piston of the mold clamp ram 2, 5 a bearing portion for the rod 2, 6 a flange of the bearing portion 5, 7 a prefill valve, 8 a booster ram, 9, 10 and 11 chambers within which an oil functions, 12 a movable platen, 13 a molding die attached to the movable platen 12, 14 a stationary platen, 15 a molding die attached to the stationary platen 14, and 16 tie bars. A straight-hydraulic mold clamping system of a horizontal construction comprising the aforementioned components is known to the art.

In the present embodiment, however, the bearing portion 5 is constituted by a bush formed of a wear resistant material such as a carbon fiber etc. and provided in the inner circumference thereof with a plurality of balancing grooves 20 as oil grooves. Each of the balancing grooves 20 is formed in the inner circumference of the bearing portion 5 in the shape of a circular ring so as to surround the rod 3 and has a V-shaped cross section. One end of the bush in the axial direction is not provided with any balancing groove 20, but communicates with the chamber 11 through a clearance 29 formed between the outer circumference of the rod 3 and the inner circumference of the bearing portion 5. The clearance 29 has a size such that the rod 3 is capable of advancing or retreating, specifically a size of about 30 μ.

The bearing portion 5 is provided in the axial center portion thereof with a pressure port 21 which communicates with an oil pressure source 22 and in the axial leading end side thereof with a port 23 which communicates with a drain tank 24. The axial leading end of the bearing portion 5 is sealed with a dust seal 25. Further, the piston 4 of the mold clamp ram 2 is provided in the outer circumference thereof with a plurality of circular ring-shaped grooves 26 having a V-shaped cross section. Both ends of the piston 4 in the axial direction are not provided with any V-shaped groove 26, but communicate respectively with the chambers 10 and 11 through a clearance. The size of this clearance is set so that a thin oil film may be formed therewithin. The piston 4 has its inner circumference provided with a ball bearing 27 as a ball and roller bearing. Similarly, the hole portions of the movable platen 12, serving as the sliding portions, into which the tie bars 16 are inserted are provided one each with a ball bearing 28. Since the ball bearings 27 and 28 can be used under the condition of non-load, ball bearings having high dimensional accuracy can selectively be adopted.

With the construction described above, a pressurized oil is constantly supplied from the oil pressure source 22 to each of the balancing grooves 20 through the pressure port 21 and simultaneously flows slightly into the drain tank 24 and the chamber 11 on the basal end side through the port 23 on the leading end side. Therefore, since the pressurized oil uniformly functions in the radial direction of each of the balancing grooves 20, the oil pressure balance within the balancing grooves 20 can be maintained in the radial direction. Within the clearance between the rod 3 and the bearing portion 5, there is formed an oil film uniformly filled with the pressurized oil, and the rod 3 can slide in the axial direction under a condition near the condition of non-load. Since the rod 3 supports both the movable platen 12 and the molding die 13 in a cantilever manner by utilization of the rigidity of its large diameter portion and since the lateral pressure exerted onto the bearing portion 5 due to the cantilever construction is dispersed by the balancing grooves 20, the rod is subjected to self-alignment, and the movable platen 12 and the molding die 13 have their parallelism maintained without being made eccentric. This oil pressure balance prevents the tie bars 16 from being loaded by the movable platen 12 and the molding die 13. Further, since the the pressurized oil is supplied independently of the mold clamping mechanism, it allows the parallelism of the platen to be secured irrespective of the mold-opening and mold-closing movements.

In the mold clamp, when the oil pressure is applied to the chamber 9 of the booster ram 8 in the mold-closing region, since the rod 3 is in a state near the non-load state, the rod 3 advances immediately. The ball bearings 28 of the movable platen 12 are not affected by their own weights and are moved with the tie bars 16 as guides. In proportion as the rod 3 advances, the distance of supporting the movable platen 12 and the molding die 13 in a cantilever manner becomes large to increase the lateral pressure. However, since the self-alignment of the rod 3 can be secured even under the increased lateral pressure by the pressurized oil stored in the balancing grooves 20, the horizontality of the rod 3 per se is still maintained precisely. The rigidity of the rod 3 does not affect either the parallelism of the movable platen 12 or that of the molding die 13. Therefore, the rod 3 allows the parallelism of the movable platen to be continuously maintained from the low-speed mold-closing region through the high-speed mold-closing region to the mold-closing protection region of the mold clamping cycle. The molding die 13 of the movable platen 12 and the molding die 15 of the stationary platen 14 have their parting surfaces fitted to register with each other. During this time, an oil is sucked into the chamber 10 through the prefill valve 7.

Further, in the high-pressure mold clamping region, the prefill valve 7 is closed and the pressurized oil acts on the mold clamp ram 2 to generate a predetermined high-pressure mold clamping force. In accordance with the mold clamp under a high pressure, the oil pressure is applied to the inside of the V-shaped grooves 26 in the piston 4. As a result, the oil pressure balance comes to function not only on the rod 3 side but also on the piston 4 side, thereby maintaining the parallelism of the platen at the two positions.

In the mold-opening, the prefill valve 7 is opened and, at the same time, the oil pressure is applied to the inside of the chamber 11. Since the oil pressure is also applied from the chamber 11 to the V-shaped grooves 26 of the piston, the oil pressure balance of the piston 4 is maintained. Accordingly, since the piston 4 and the rod 3 are in a state near the state of non-load and since the bearing 27 is disposed on the inner circumference of the piston 4, the mold clamp ram 2 retreats in susceptible response to the oil pressure to effect the mold-opening. It goes without saying that the parallelism of the platen has been maintained in the mold-opening region.

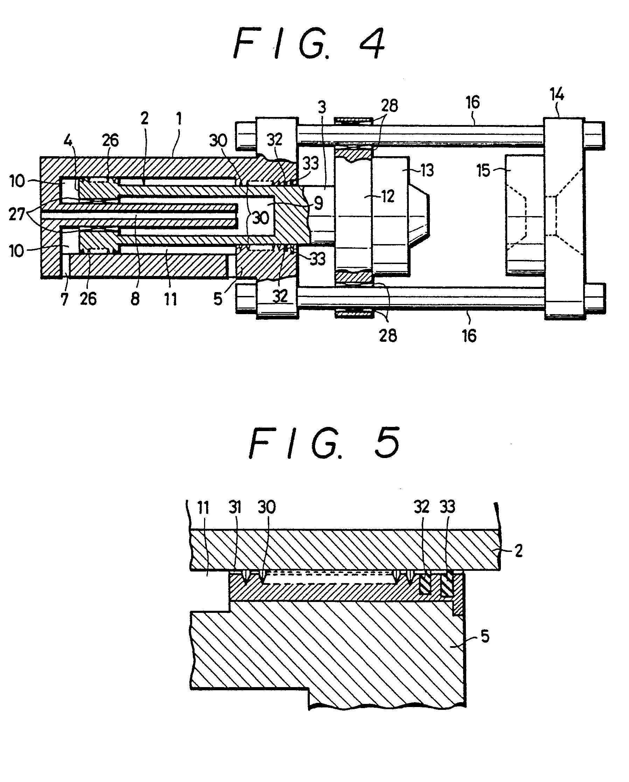

In Figures 4 and 5 showing another embodiment of the mold clamping system according to the present invention, the reference numerals identical to those of the preceding embodiment dipict the same components which function similarly and, therefore, duplication in explanation thereof will be omitted.

There are formed a plurality of circular ring-shaped balancing grooves 30, without interposing any part etc., which communicate with the chamber 11 through a clearance 31. The clearance 31 has a size such that a thin oil film may be formed therein. Though the size depends on working accuracy, it is set to be not more than about 15 μ, preferably not more than 5 μ. The axial end of the bush on the movable platen side is sealed such as with seal packing 32 and a dust seal 33, for example.

The balancing grooves 30 of the bearing portion 5 are filled uniformly with an oil and a thin oil film is formed within the clearance 31. Similarly, the V-shaped grooves 26 are filled with an oil and an oil film is formed within the clearances on both sides of the piston. Therefore, the thrust of the rod 3 in the axial direction is in a state near the state of the non-load.

In the mold-closing, in proportion as the rod 3 advances, the oil film formed in the clearance 31 serves as a boundary layer and an oil is supplemented into the balancing grooves 30 in an enfolded state. The thin oil films formed in the V-shaped grooves 26 and the clearances of the piston 4 serve also as boundary layers.

In the mold-opening, oil pressure is applied from the chamber 11 to the balancing grooves 30 through the clearance 31 and the thin oil film serves as a boundary layer.

According to the embodiment described above, since the oil film can function as the rod 3 advances or retreats, it is unnecessary to provide any special construction for the supply of pressurized oil. Therefore, the construction can be greatly simplified and the reduction in manufacturing cost can be achieved.

Although the booster ram type mold clamping system has been described with reference to the illustrated embodiments, the present invention should not be limited to these embodiments. Insofar as the straight-hydraulic mold clamping system comprises a mold clamp cylinder, platens and tie bars, the system may be of an auxiliary cylinder type and an intensifying cylinder type, for example.

Further, in place of the ball bearing 27 used in the illustrated embodiments, a plain bearing may be used. In this case, the plain bearing may be provided in the inner circumferential surface of the bearing hole thereof with V-shaped grooves.

According to the present invention, therefore, the following effects can be brought about.

Since the bearing portion for the rod is provided with annular oil grooves within which a pressurized oil functions, the rod can be horizontally supported by utilization of the oil film formed within the clearance at the bearing portion and, at the same time, the parallelism of the movable platen and the molding die attached thereto can precisely be maintained by utilization of the rigidity of the rod. Although the lateral pressure is exerted on the bearing portion in proportion as the rod advances or retreats, since the rod is subjected to self-alignment, the parallelism of the platen can be set uniformly at all times. As a result, it is possible to reduce the deviation from parallelism to less than about 10 μ and, consequently, the present invention is applicable to molding dies for molding precision parts to make it possible to effect precision molding.

Since the pressurized oil acts on both the rod and the bearing portion, the rod becomes in a state near the non-load state and, therefore, it is possible to effect mold-opening and mold-closing at a high velocity without causing any rattling phenomenon. In the mold-closing protection region, the low velocity feed has heretofore been effected under large load. In the present invention, however, since the slow speed feed can be carried out under slight pressure particularly in the mold-closing protection region, it is possible to precisely detect the presence of foreign matter.

Since the movable platen is supported in a cantilever manner by utilization of the rigidity of the rod, the diameter of the tie bars can be made small and the surface of the movable platen to which the molding die is to be attached can be enlarged.

Since the contact between the rod and the bearing portion is not metallic contact, the contact portion is not worn off even in use for a long period of time. Precise parallelism of the platen can be maintained over a long period of time. Even though the weight of the molding die varies, since the piston is always subjected to self-alignment, there is no need of carrying out slight adjustment.

## Claim

A straight-hydraulic mold clamping system of an injection molding machine, comprising a rod (3) supported slidably by a bearing portion (5) of a mold clamp cylinder (1) so as to slidably protrude from the mold clamp cylinder, a movable platen (12) attached to the rod and guided by tie bars (16) so as to effect mold-opening and mold-closing movements relative to a stationary platen (14), and a piston (4) connected to the rod and slidably mounted within the mold clamp cylinder (1); characterized in that said bearing portion (5) is provided in its inner peripheral surface with a plurality of balancing annular oil grooves (20, 30) which are spaced apart from each other in the axial direction thereof and are unconnected with one another within the body of the bearing portion (5), and said piston (4) is provided in its outer peripheral surface with a plurality of balancing annular oil grooves (26) which are spaced apart from each other in the axial direction thereof and are unconnected with one another within the body of the piston (4), clearances for oil films being provided between the confronting peripheral surfaces of the rod (3) and the bearing portion (5), and of the piston (4) and the mold clamp cylinder (1), respectively.

## Patentanspruch

Hydraulische Werkzeugschließeinheit einer Spritzgießmaschine, umfassend einen Stab (3), der in gleitender Ausführung von einem Lagerabschnitt (5) eines Werkzeugschließzylinders (1) so gehalten wird, daß er in gleitender Ausführung über den Werkzeugschließzylinder hinausragt, eine bewegliche Platte (12), die mit dem Stab verbunden ist und von Führungsstangen (16) so geführt wird, daß werkzeugöffnende und werkzeugschließende Bewegungen im Verhältnis zu einer stationären Platte (14) erfolgen können, sowie einen Kolben (4), der mit dem Stab verbunden und in gleitender Ausführung innerhalb des Werkzeugschließzylinders (1) montiert ist; dadurch gekennzeichnet, daß der genannte Lagerabschnitt (5) an seiner inneren Umfangsfläche mit einer Vielzahl ringförmiger Ausgleichsölnuten (20, 30) ausgestattet ist, die in Axialrichtung jeweils mit Abstand zueinander angeordnet sind und innerhalb des Körpers des Lagerabschnitts (5) nicht miteinander in Verbindung stehen, und der genannte Kolben (4) an seiner äußeren Umfangsfläche mit einer Vielzahl ringförmiger Ausgleichsölnuten (26) ausgestattet ist, die in Axialrichtung jeweils mit Abstand zueinander angeordnet sind und innerhalb des Körpers des Kolbens (4) nicht miteinander in Verbindung stehen, wobei jeweils Durchgänge für die Ölfilme zwischen den gegenüberliegenden Umfangsflächen des Stabs (3) und des Lagerabschnitts (5) bzw. des Kolbens (4) und des Werkzeugschließzylinders (1) vorgesehen sind.

## Revendication

Dispositif hydraulique en ligne de verrouillage de moule d'une machine de moulage par injection, comprenant une tige (3) soutenue de manière coulissante par une partie de support (5) d'un cylindre de verrouillage de moule (1) de manière à faire saillie en coulissant du cylindre de verrouillage de moule, un plateau mobile (12) fixé à la tige et guidé par des barres de raccordement (16) de manière à effectuer des mouvements d'ouverture de moule et de fermeture de moule par rapport à un plateau fixe (14), et un piston (4) relié à la tige et monté de façon coulissante à l'intérieur du cylindre de verrouillage de moule (1); caractérisé en ce que ladite partie de support (5) est munie dans sa surface périphérique interne d'un ensemble de rainures de graissage annulaires d'équilibrage (20, 30) qui sont espacées l'une de l'autre dans la direction axiale et ne sont pas reliées l'une avec l'autre à l'intérieur du corps de la partie de support (5), et que ledit piston (4) est muni dans sa surface périphérique externe d'un ensemble de rainures de graissage annulaires d'équilibrage (26) qui sont espacées l'une de l'autre dans la direction axiale et ne sont pas reliées l'une avec l'autre à l'intérieur du corps du piston (4), de jeux pour des films d'huile étant placés entre les surfaces périphériques se faisant face de la tige (3) et de la partie de support (5), et du piston (4) et du cylindre de verrouillage de moule (1), respectivement.

FIG. 1

FIG. 2

FIG. 3

1

# F I G. 4

# F I G. 5